# EUROPÄISCHE PATENTSCHRIFT

(11) **EP 2 011 422 B1**
(45) Veröffentlichungstag und Bekanntmachung des Hinweises auf die Patenterteilung: **18.01.2012**
(21) Anmeldenummer: 07111836.8
(22) Anmeldetag: 05.07.2007
(51) Int. Cl.: A47J 31/41

(54) **Kaffeemaschine**
Coffee machine
Machine à café

(43) Veröffentlichungstag der Anmeldung: 07.01.2009
(73) Patentinhaber: Schaerer AG, 4528 Zuchwil (CH)
(72) Erfinder: Blumenauer, Daniel, 3018, Bern (CH); Künzler, Bernhard, 8600, Dübendorf (CH)
(74) Vertreter: BOVARD AG

(56) Entgegenhaltungen:
- WO-A-00/42891
- WO-A-2006/058713
- WO-A-2006/135864

## Beschreibung

Die vorliegende Erfindung bezieht sich auf eine Kaffeemaschine zur Ausgabe von gebrühtem Kaffee mit einem Kaffeeausguss, unter welchen ein Gefäss, insbesondere eine Tasse, hinstellbar ist, so dass der durch den Kaffeeausguss austretende gebrühte Kaffee in das Gefäss gelangt, mit einer Steuereinheit, mit welcher der Betrieb der Kaffeemaschine und der Bezug von Kaffee steuerbar ist, und mit mindestens einem Zuführmittel zur Ausgabe mindestens eines eine flüssige Form aufweisenden Aromastoffes, welches jeweils mit einem verschliessbaren Behälter für die Aufnahme eines Aromastoffes sowie Förder- und Dosiermitteln zur Förderung einer dosierten Menge des Aromastoffes aus dem Behälter in eine Leitung ausgestattet ist, welche Leitung mit einem Ausguss versehen ist, der so angeordnet ist, dass der geförderte Aromastoff in das unter dem Kaffeeausguss stehende Gefäss gelangt.

Derartige Kaffeemaschinen sind in vielfältiger Weise bekannt. Insbesondere bekannt sind automatische Kaffeemaschinen, in welchen für jeden zu beziehenden Kaffee aus Kaffeebohnen frisch gemahlenes Kaffeepulver hergestellt, das einer Brühkammer zugeführt wird, in welcher der zu beziehende Kaffee unter optimalen Bedingungen gebrüht werden kann. Derartige Kaffeemaschinen können auch mit Einrichtungen ergänzt sein, mit welchen dem bezogenen Kaffee in bekannter Weise Milch in verschiedener Konsistenz zugeführt werden kann, wodurch mit derartigen Kaffeemaschinen neben normalen und Espresso-Kaffees auch Milchkaffe, Cappuccino und Kaffee Macchiato usw. hergestellt werden können.

Immer beliebter sind auch Kaffeegetränke, bei welchen den aus der Kaffeemaschine bezogenen Kaffees zusätzlich ein Aromastoff zugesetzt wird. Besonders geeignete Aromen sind hierbei beispielsweise Vanille, Amaretto, Haselnuss, Caramel, Zimt, Mandel oder Schokolade. Diese Aromastoffe werden den durch die Kaffeemaschine hergestellten Kaffees von Hand beigefügt und auch von Hand gemischt.

Aus der W02006/135864 ist eine Einrichtung bekannt, bei welcher die beizumischenden Aromastoffe in der Emulgiereinrichtung erwärmt und dem Getränk beigemischt werden, was einen komplizierten Aufbau der Einrichtung erfordert.

Die Aufgabe der vorliegenden Erfindung besteht nun darin, eine Kaffeemaschine in einfacher Weise so auszugestalten, dass beim Bezug eines Kaffees aus dieser Kaffeemaschine neben der Kaffeeauswahl auch ausgewählt werden kann, ob diesem Kaffee ein zusätzlicher Aromastoff beigefügt werden soll, so dass gegebenenfalls der von der Kaffeemaschine ausgegebene Kaffee bereits mit diesem gewählten Aromastoff versehen ist.

Erfindungsgemäss erfolgt die Lösung dieser Aufgabe dadurch, dass die Förder- und Dosiermittel für jedes Zuführmittel aus einer weiteren Leitung bestehen, welche in den verschliessbaren Behälter mündet, welche an eine Druckluftquelle angeschlossen ist, und durch welche dem verschliessbaren Behälter gesteuert Druckluft zuführbar ist, und dass die Leitung mit dem dem Ausguss entgegengesetzten Ende in den in den Behälter eingefüllten flüssigen Aromastoff eingetaucht ist.

Mit einer derartig ausgestalteten Kaffeemaschine ist der Bezug von zusätzlich aromatisierten Kaffees in einfachster Weise möglich.

Der Aromastoff weist eine flüssige Form auf, und ist in den Behälter, der verschliessbar ist, einfüllbar. Durch die Verwendung eines Aromastoffes in flüssiger Form kann dieser während des Auslieferns des gebrühten Kaffees in die Tasse diesem durch den entsprechend angeordneten Ausguss beigefügt werden, eine optimale Vermischung erfolgt automatisch.

Der einfache Aufbau der Förder- und Dosiermittel ermöglicht es, diese kostengünstig herzustellen, durch die Verwendung einer Druckluftquelle lässt sich die Förderung und Dosierung des zuzuführenden Aromastoffes in einfacher Weise regulieren.

In vorteilhafter Weise besteht die Druckluftquelle aus einer Luftpumpe, welche über die Steuereinheit aktivierbar und deaktivierbar ist. Dadurch kann die Kaffeemaschine autonom (ohne äussere Druckluftquelle) betrieben werden.

Eine weitere vorteilhafte Ausgestaltung der Erfindung besteht darin, dass der Kaffeemaschine mehrere Zuführmittel zugeordnet sind, wodurch es möglich wird, unter verschiedenen Aromastoffen, die dem zu beziehenden Kaffee beigefügt werden können, auszuwählen.

Eine weitere vorteilhafte Ausgestaltung der Erfindung besteht darin, dass jedes dieser Zuführmittel mit jeweils einer Luftpumpe ausgestattet ist, welche jeweils über eine weitere Leitung mit dem entsprechenden Behälter verbunden ist, in welcher weiteren Leitung jeweils ein Entlüftungsventil eingesetzt ist. Mit dieser Anordnung lassen sich gemeinsam verschiedene Aromastoffe ausgeben.

Es kann auch vorteilhaft sein, in jede weitere Leitung zwischen Entlüftungsventil und Behälter ein Schliessventil einzusetzen, wodurch die Steuerung über dieses Schliessventil erfolgen kann.

Eine weitere vorteilhafte Ausgestaltung der Erfindung besteht darin, dass in jeden Behälter eines Zuführmittels jeweils eine weitere Leitung mündet, welche weiteren Leitungen mit jeweils einem Schliessventil versehen sind, welche weiteren Leitungen an ein Verteilelement angeschlossen sind, von welchem eine zentrale Leitung an eine Luftpumpe angeschlossen ist und in welcher zentralen Leitung ein Entlüftungsventil eingesetzt ist. Dadurch kann ein vereinfachter Aufbau der mehreren Zuführmittel erreicht werden, es ist nur eine Luftpumpe zur Abgabe von verschiedenen Aromastoffen erforderlich.

In vorteilhafter Weise sind alle Schliessventile und Lüftungsventile der Zuführmittel über die Steuereinheit steuerbar, dadurch kann bei der Auswahl von zu beziehendem Kaffee beispielsweise durch Knopfdruck ausgewählt werden, ob und gegebenenfalls welcher Aromastoff dem Kaffee beizufügen ist.

Ausführungsformen der vorliegenden Erfindung werden nachfolgend anhand der beiliegenden Zeichnung beispielhaft näher erläutert.

Es zeigt:
Fig. 1 in schematischer Darstellung eine Kaffeemaschine mit zugeordnetem Zuführmittel für die Beifügung eines Aromastoffes in den zu beziehenden Kaffee;
Fig. 2 in schematischer Darstellung die Zuordnung mehrerer Zuführmittel zu einer Kaffeemaschine zur Ausgabe von unterschiedlichen Aromastoffen; und
Fig. 3 in schematischer Darstellung eine andere Ausführungsart zur Ausgestaltung von mehreren einer Kaffeemaschine zugeordneten Zuführmitteln.

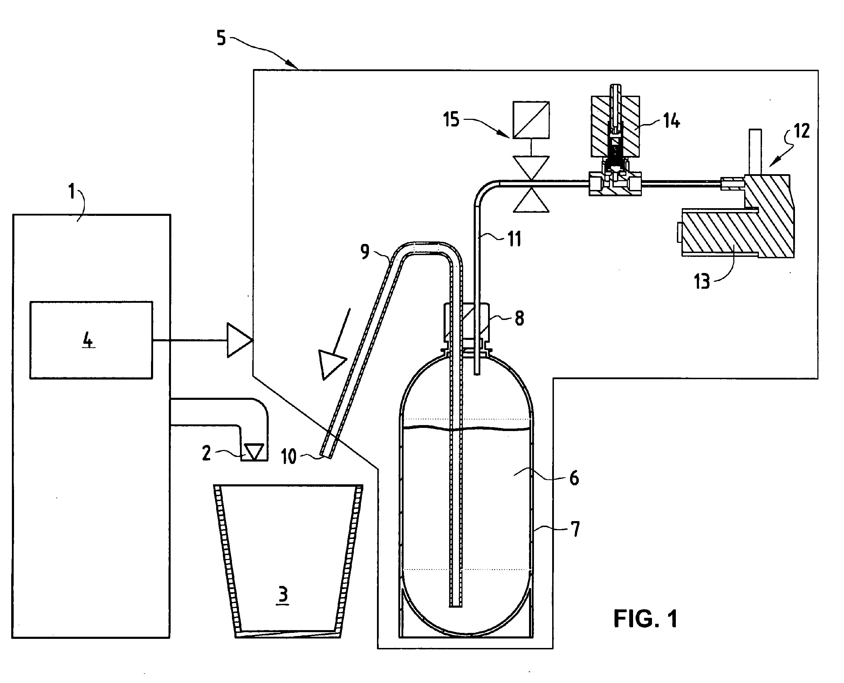

In Fig. 1 ist in schematischer Weise eine Kaffeemaschine 1 dargestellt. Diese Kaffeemaschine 1 ist in bekannter, nicht dargestellter Weise so ausgestaltet, dass in einem Mahlwerk Kaffeepulver aus frisch zugeführten Kaffeebohnen gemahlen wird. Dieses gemahlene Pulver wird in eine Brühkammer eingeführt, die bekannterweise verschliessbar ist und durch welche das auf die richtige Temperatur erwärmte Wasser mit einem bestimmten Druck hindurchgepresst wird. Der so gebrühte Kaffee gelangt über einen Kaffeeausguss 2 in eine unterhalb dieses Kaffeeausgusses 2 hingestellte Tasse 3. Der Kaffeepulverrest wird aus der Brühkammer ausgestossen, die Kaffeemaschine ist zum Bezug eines weiteren Kaffees bereit.

In bekannter Weise ist diese Kaffeemaschine mit einer Steuereinheit 4 versehen, welche den Bezug eines Kaffees automatisch steuert. Hierbei können wahlweise unterschiedliche Kaffees bezogen werden, die Auswahl des entsprechenden Kaffees kann beispielsweise durch Eingabe über Tasten der Steuereinheit übermittelt werden.

In dieser Kaffeemaschine kann zusätzlich eine Einrichtung eingesetzt sein, die Milch in verschiedener Form in die Tasse 3, die unter dem Kaffeeausguss 2 hingestellt ist, ausgeben kann, beispielsweise kalte oder warme Milch sowie geschäumte Milch. Dadurch können neben normalem Kaffee und Espresso oder Ristretto auch Milchkaffee, Cappuccino, Kaffee Macchiato usw. von dieser Kaffeemaschine bezogen werden.

Dieser Kaffeemaschine 1 ist ein Zuführmittel 5 zur Zuführung eines Aromastoffes 6 in den von der Kaffeemaschine 1 bezogenen Kaffee zugeordnet. Dieses Zuführmittel 5 umfasst einen Behälter 7, der die Form einer Flasche aufweist, und welcher mit einem Deckel 8 verschliessbar ist. In diesen Behälter 7 kann der Aromastoff 6, der in flüssiger, sirupähnlicher Form vorliegt, eingefüllt werden. In bekannter, nicht dargestellter Weise kann der Füllgrad des Aromastoffes 6 in diesem Behälter 7 überwacht werden, dem Benutzer kann dadurch angezeigt werden, wenn der Behälter wieder aufgefüllt werden muss.

Durch den Deckel 8 ist eine Leitung 9 in den Behälter eingeführt. Diese Leitung 9 taucht in den im Behälter 7 sich befindenden Aromastoff 6 ein. Das andere Ende dieser Leitung 9 ist mit einem Ausguss 10 versehen. Dieser Ausguss 10 ist benachbart zum Kaffeeausguss 2 angeordnet, so dass der aus diesem Ausguss 10 austretende Aromastoff 6 ebenfalls in die Tasse 3 gelangt, die unter dem Kaffeeausguss 2 abgestellt ist.

Durch den Deckel 8 ist eine weitere Leitung 11 in den Innenraum des Behälters 7 geführt. Diese weitere Leitung 11 ist an eine Druckluftquelle 12 angeschlossen, die im vorliegenden Ausführungsbeispiel als Luftpumpe 13 ausgebildet ist. In die weitere Leitung ist ein Entlüftungsventil 14 eingesetzt, zwischen Entlüftungsventil 14 und Behälter 7 ist in die weitere Leitung ebenfalls noch ein Schliessventil 15 eingesetzt, das beispielsweise als Schlauchquetschventil ausgebildet sein kann.

Dieses Zuführmittel ist in vorteilhafter Weise in die Kaffeemaschine 1 integriert. Die steuerbaren Elemente dieses Zuführmittels 5, nämlich die Luftpumpe 13, das Entlüftungsventil 14 und das Schliessventil 15 sind in bekannter, nicht dargestellter Weise mit der Steuereinheit 4 der Kaffeemaschine verbunden. Zum Bezug eines Kaffees wird, wie vorgängig beschrieben, das entsprechende Kaffeegetränk über die Wahltasten ausgewählt. Zusätzlich sind in bekannter, nicht dargestellter Weise Wahltasten vorgesehen, mit welchen die Zugabe des Aromastoffes in den zu beziehenden Kaffee ausgewählt werden kann. Bei entsprechender Auswahl wird während der Ausgabe des Kaffees in die Tasse 3 über die Steuereinheit 4 die Luftpumpe 13 aktiviert, über die weitere Leitung 11 wird dem Behälter 7 Luft zugeführt, durch den entstehenden Überdruck im Behälter gelangt der Aromastoff 6 über die Leitung 9 und den Ausguss 10 in die Tasse 3 und wird mit dem ebenfalls einfliessenden Kaffee vermischt. Die abzugebende Menge des Aromastoffes 6 kann eingestellt werden. Wenn die gewünschte Dosis ausgeliefert worden ist, kann die Luftpumpe deaktiviert werden, das Entlüftungsventil wird betätigt, der Druck im Innenraum des Behälters und der weiteren Leitung 11 wird abgebaut, die Zuführung von Aromastoff wird sofort gestoppt. Zusätzlich kann noch das Schliessventil 15 geschlossen werden. Die Tasse mit dem ausgelieferten Kaffee und dem beigefügten Aromastoff kann weggenommen werden. Mit dieser Einrichtung lässt sich je nach Wunsch dem zu beziehenden Kaffee Aromastoff beifügen oder nicht. Es wäre auch denkbar, dass die zugeführte Dosismenge von Aromastoff ebenfalls ausgewählt werden kann, zum Beispiel durch Auswahl von stark aromatisiert, mittel aromatisiert oder schwach aromatisiert.

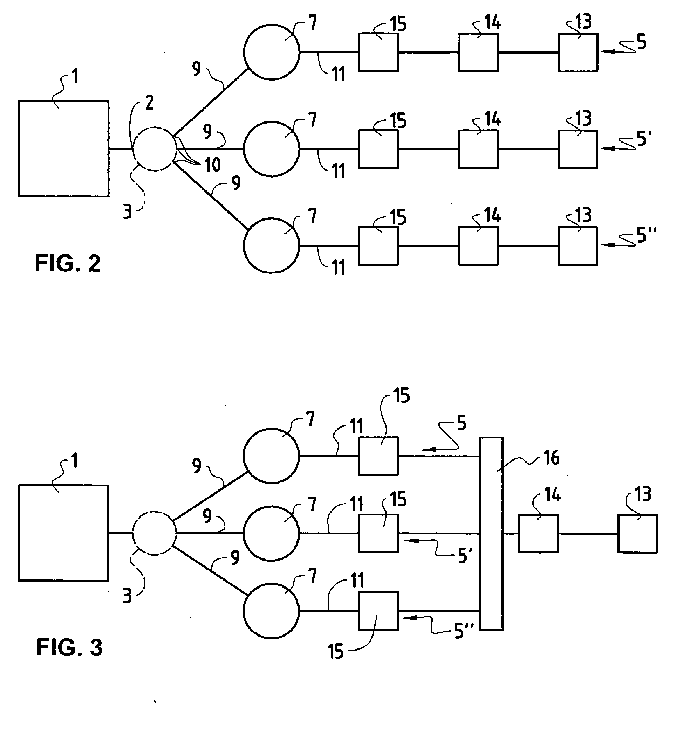

Wie aus Fig. 2 ersichtlich ist, können einer Kaffeemaschine 1 mehrere Zuführmittel 5, 5', 5" zugeordnet werden. Jedes dieser Zuführmittel 5, 5', 5" umfasst einen Behälter 7, eine Leitung 9, deren Ausgüsse 10 in die unter dem Kaffeeausguss 2 gestellte Tasse 3 münden, eine weitere Leitung 11, die jeweils mit einer Luftpumpe 13 verbunden sind. In die weiteren Leitungen 11 ist jeweils ein Entlüftungsventil 14 und ein Schliessventil 15 eingesetzt. Jeder Behälter 7 des jeweiligen Zuführmittels 5, 5', 5" kann einen anderen Aromastoff enthalten. Dadurch können beim Bezug eines Kaffees von der Kaffeemaschine 1 zusätzlich noch verschiedene Aromastoffe ausgewählt werden, wobei jeweils über die Steuereinheit 4 das entsprechende Zuführmittel 5, 5', 5" angewählt werden kann, wobei der gewünschte Aromastoff in der vorgängig beschriebenen Art abgegeben wird. In diesem Ausführungsbeispiel sind drei Zuführmittel 5, 5', 5" dargestellt, selbstverständlich kann auch eine andere Anzahl von Zuführmitteln angeordnet werden, je nachdem, wie gross das Angebot einer Auswahl an unterschiedlichen Aromastoffen sein soll.

In Fig. 3 ist eine weitere Ausgestaltungsmöglichkeit dargestellt, wie mehrere Zuführmittel 5, 5', 5", die einer Kaffeemaschine 1 zugeordnet sind, ausgebildet sein können. Jedes der Zuführmittel 5, 5', 5" ist wiederum mit jeweils einem Behälter 7 versehen, deren Leitungen 9 in die Tasse 3 münden. In jedem Behälter 7 kann ein anderer Aromastoff untergebracht sein. Die weiteren Leitungen 11 sind mit einem Verteilelement 16 verbunden, wobei jeweils zwischen Behälter 7 und Verteilelement 16 ein Schliessventil 15 eingesetzt ist. Am Verteilelement 16 ist eine zentrale Leitung 17 angeschlossen, die mit der Luftpumpe 13 verbunden ist. Zwischen Verteilelement 16 und Luftpumpe 13 ist das Entlüftungsventil 14 eingesetzt. Zur Ausgabe von Aromastoff wird über die Steuereinheit die Luftpumpe 13 aktiviert, das Schliessventil 15, das dem Behälter 7 mit dem ausgewählten Aromastoff zugeordnet ist, wird geöffnet, der entsprechende Aromastoff wird abgegeben. Die anderen Schliessventile bleiben geschlossen. Sobald die gewünschte Menge an Aromastoff ausgeliefert ist, wird das entsprechende Schliessventil 15 geschlossen, die Luftpumpe 13 wird deaktiviert, das Entlüftungsventil 14 wird zum Druckablass geöffnet.

Während mit der Ausführungsform, wie sie zu Fig. 2 beschrieben worden ist, miteinander mehrere Aromastoffe bezogen werden könnten, ist gemäss der Ausführungsform, wie sie zu Fig. 3 beschrieben worden ist, nur ein Bezug in Serie möglich. Mit dieser Ausgestaltung können aber Luftpumpen und Entlüftungsventile eingespart werden.

Mit der erfindungsgemässen Einrichtung ist es möglich, Kaffeemaschinen so zu ergänzen, dass dem aus diesen Kaffeemaschinen beziehbaren Kaffeegetränk noch ein zusätzliches Aroma gegeben werden kann, indem eine Zuführung des entsprechenden Aromastoffes ausgeführt werden kann, was den Kaffeegenuss bei entsprechenden Liebhabern erhöht.

## Patentansprüche

1. Kaffeemaschine (1) zur Ausgabe von gebrühtem Kaffee mit einem Kaffeeausguss (2), unter welchen ein Gefäss (3), insbesondere eine Tasse, hinstellbar ist, so dass der durch den Kaffeeausguss (2) austretende gebrühte Kaffee in das Gefäss (3) gelangt, mit einer Steuereinheit (4), mit welcher der Betrieb der Kaffeemaschine (1) und der Bezug von Kaffee steuerbar ist, und mit mindestens einem Zuführmittel (5) zur Ausgabe mindestens eines eine flüssige Form aufweisenden Aromastoffes (6), welches jeweils mit einem verschliessbaren Behälter (7) für die Aufnahme eines Aromastoffes (6) sowie Förder- und Dosiermitteln (12, 13, 14, 15) zur Förderung einer dosierten Menge des Aromastoffes (6) aus dem Behälter (7) in eine Leitung (9) ausgestattet ist, welche Leitung (9) mit einem Ausguss (10) versehen ist, der so angeordnet ist, dass der geförderte Aromastoff (6) in das unter dem Kaffeeausguss (2) stehende Gefäss (3) gelangt, **dadurch gekennzeichnet, dass** die Förder- und Dosiermittel für jedes Zuführmittel (5) aus einer weiteren Leitung (11) bestehen, welche in den verschliessbaren Behälter (7) mündet, welche an eine Druckluftquelle (12) angeschlossen ist, und durch welche dem verschliessbaren Behälter (7) gesteuert Druckluft zuführbar ist, und dass die Leitung (9) mit dem dem Ausguss (10) entgegengesetzten Ende in den in den Behälter (7) eingefüllten flüssigen Aromastoff (6) eingetaucht ist.

2. Kaffeemaschine nach Anspruch 1, **dadurch gekennzeichnet, dass** die Druckluftquelle (12) aus einer Luftpumpe (13) besteht, welche über die Steuereinheit (4) aktivierbar und deaktivierbar ist.

3. Kaffeemaschine nach Anspruche 1 oder 2, **dadurch gekennzeichnet, dass** dieser mehrere Zuführmittel (5, 5', 5") zugeordnet sind.

4. Kaffeemaschine nach Anspruch 3, **dadurch gekennzeichnet, dass** jedes dieser Zuführmittel (5, 5', 5") mit jeweils einer Luftpumpe (13) ausgestattet ist, welche jeweils über eine weitere Leitung (11) mit dem entsprechenden Behälter (7) verbunden ist, in welcher weiteren Leitung (11) jeweils ein Entlüftungsventil (14) eingesetzt ist.

5. Kaffeemaschine nach Anspruch 4, **dadurch gekennzeichnet, dass** in jede weitere Leitung (11) zwischen Entlüftungsventil (14) und Behälter (7) ein Schliessventil (15) eingesetzt ist.

6. Kaffeemaschine nach Anspruch 4, **dadurch gekennzeichnet, dass** in jeden Behälter (7) eines Zuführmittels (5, 5', 5") jeweils eine weitere Leitung (11) mündet, welche weiteren Leitungen (11) mit jeweils einem Schliessventil (15) versehen sind, welche weiteren Leitungen (11) an ein Verteilelement (16) angeschlossen sind, von welchem eine zentrale Leitung (17) an eine Luftpumpe (13) angeschlossen ist und in welcher zentralen Leitung (17) ein Entlüftungsventil (14) eingesetzt ist.

7. Kaffeemaschine nach einem der Ansprüche 1 bis 6, **dadurch gekennzeichnet, dass** alle Schliessventile (15) und Entlüftungsventile (14) der Zuführmittel (5, 5', 5") über die Steuereinheit (4) steuerbar sind.

## Claims

1. Coffee machine (1) for dispensing brewed coffee with a coffee spout (2), under which a vessel (3), in particular a cup, is placeable, so the brewed coffee emerging through the coffee spout (2) ends up in the vessel (3), with a control unit (4), with which the operation of the coffee machine (1) and the dispensing of coffee is controllable, and with at least one supply means (5) for dispensing at least one flavoring agent (6) having a liquid form, which supply means is equipped in each case with a closable container (7) for accommodat-ing a flavoring agent (6) and conveying and metering means (12, 13, 14, 15) for delivering a metered quantity of the flavoring agent (6) from the container (7) into a line (9), which line (9) is provided with a spout (10) which is arranged such that the delivered flavoring agent (6) ends up in the vessel (3) positioned under the coffee spout (2), **characterized in that** the conveying and metering means for each supply means (5) consist of a further line (11), which line comes out into the closable container (7), which line is connected to a compressed air source (12), and by means of which compressed air is able to be supplied to the closable container (7) in a controlled way, and the line (9) is submerged, by the end opposite the spout (10), in the liquid flavoring agent (6) filled in the container (7)..

2. Coffee machine according to claim 1, **characterized in that** the compressed air source (12) consists of an air pump (13), which is able to be activated and deactivated via the control unit (4).

3. Coffee machine according to claims 1 or 2, **characterized in that** a plurality of supply means (5, 5', 5") are associated therewith.

4. Coffee machine according to claim 3, **characterized in that** each of these supply means (5, 5', 5") is provided with an air pump (13) in each case, which is connected to the corresponding container (7) in each case via a further line (11), in which further line (11) a ventilating valve (14) is inserted in each case.

5. Coffee machine according to claim 4, **characterized in that** inserted into each further line (11) between ventilating valve (14) and container (7) is a closing valve (15).

6. Coffee machine according to claim 4, **characterized in that** a further line (11) comes out in each case into each container (7) of a supply means (5, 5', 5"), which further lines (11) are each provided with a closing valve (15), which further lines (11) are connected to a distribution element (16), from which a central line (17) is connected to an air pump (13) and in which central line (17) a ventilating valve (14) is inserted.

7. Coffee machine according to one of the claims 1 to 6, **characterized in that** all closing valves (15) and ventilating valves (14) of the supply means (5, 5', 5") are controllable via the control unit (4).

## Revendications

1. Machine à café (1) pour la distribution du café infusé, comprenant un bec verseur du café (2), sous lequel peut être déposé un récipient (3), en particulier une tasse, de sorte que le café infusé sortant du bec verseur du café (2) rentre dans le récipient (3), avec une unité de contrôle (4), par le biais de laquelle le fonctionnement de la machine à café (1) et la prise du café peut être contrôlé, et avec au moins un moyen d'alimentation (5) pour la distribution d'au moins un agent aromatisant (6) ayant une forme liquide, chacun muni d'un conteneur refermable (7) pour la réception d'un agent aromatisant (6) ainsi que des moyens de convoyage et de dosage (12, 13, 14, 15) pour l'extraction d'une quantité dosée de l'agent aromatisant (6) du conteneur vers une conduite (9), ladite conduite (9) étant munie d'un bec verseur (10), qui est agencé pour que l'agent aromatisant (6) extrait rentre dans le récipient (3) se trouvant sous le bec verseur du café (2), **caractérisé en ce que** les moyens de convoyage et de dosage pour chaque moyen d'alimentation (5) consistent en une conduite supplémentaire (11) qui débouche dans le conteneur refermable (7), laquelle est reliée à une source d'air comprimé (12) et par laquelle le conteneur refermable (7) peut être alimenté en air comprimé de manière contrôlée, et **en ce que** la conduite (9) est baignée dans l'agent aromatisant (6) liquide versé dans le conteneur (7) par l'extrémité opposée au bec verseur (10).

2. Machine à café selon la revendication 1, **caractérisée en ce que** la source d'air comprimé (12) est composée d'une pompe à air (13) qui peut être activée et désactivée par le biais de l'unité de contrôle (4).

3. Machine à café selon la revendication 1 ou 2, **caractérisée en ce qu'**elle est munie de plusieurs de ces moyens d'alimentation (5, 5', 5").

4. Machine à café selon la revendication 3, **caractérisée en ce que** chacun de ces moyens d'alimentation (5, 5', 5") est muni d'une pompe à air (13) qui est reliée par le biais d'une conduite supplémentaire (11) au conteneur (7) correspondant, et **en ce qu'**une valve d'échappement (14) est insérée dans chacune des conduites supplémentaires (11).

5. Machine à café selon la revendication 4, **caractérisée en ce qu'**une valve de fermeture (15) est insérée dans chacune des conduites supplémentaires (11) entre la valve d'échappement (14) et le conteneur (7).

6. Machine à café selon la revendication 4, **caractérisée en ce qu'**une conduite supplémentaire (11) est baignée dans chacun des conteneurs (7) d'un moyen d'alimentation (5, 5', 5"), chacune desdites conduites supplémentaires (11) étant munie d'une valve de fermeture (15), lesdites conduites supplémentaires (11) étant connectées à un élément distributeur (16), à partir duquel une conduite centrale (17) est connectée à une pompe à air (13) et dans laquelle conduite centrale (17) est insérée une valve d'échappement (14).

7. Machine à café selon l'une quelconque des revendications 1 à 6, **caractérisée en ce que** toutes les valves de fermeture (15) et toutes les valves d'échappement (14) des moyens d'alimentation (5, 5', 5") peuvent être contrôlées par le biais de l'unité de contrôle (4).
